# FASCICULE DE BREVET EUROPEEN

(11) **EP 2 171 966 B1**
(45) Date de publication et mention de la délivrance du brevet: **21.11.2018**
(21) Numéro de dépôt: 08806092.6
(22) Date de dépôt: 25.06.2008
(51) Int. Cl.: H04L 29/06

(54) **GESTION DE SESSIONS MULTI-FLUX ENTRE UN TERMINAL ET UN SERVEUR**
VERWALTUNG VON MULTISTREAM-SITZUNGEN ZWISCHEN EINEM ENDGERÄT UND EINEM SERVER
MANAGING MULTI-STREAM SESSIONS BETWEEN A TERMINAL AND A SERVER

(30) Priorité: 29.06.2007 FR 0756191
(43) Date de publication de la demande: 07.04.2010
(73) Titulaire: Orange, 75015 Paris (FR)
(72) Inventeur: AYARI, Narjess, F-22300 Lannion (FR); BARBARON, Denis, F-22700 Louannec (FR)
(86) Numéro de dépôt international: PCT/FR2008/051163
(87) Numéro de publication internationale: WO 2009/004267

(56) Documents cités:
- WO-A-2005/088929
- WO-A-2006/084503
- US-A1- 2005 207 443
- US-A1- 2006 171 392

## Description

La présente invention se rapporte au domaine de gestion de sessions au cours desquelles un terminal et un serveur s'échangent des blocs d'information qui sont organisés en plusieurs flux.

Pour accéder à certains services numériques, un terminal client doit échanger des blocs d'information avec un serveur qui fournit le service recherché.

Pour certains services simples, comme la consultation d'un document via une session HTTP ("Hypertext Transfert Protocol"), les blocs d'information transmis sont organisés en un seul flux. La session est dite alors mono-flux.

Pour d'autres services plus complexes, comme un service de transmission vidéo en continu (appelé "videostreaming" en anglais), les blocs d'information sont organisés en plusieurs flux. Ces différents flux sont, par exemple, un flux transportant des blocs d'information dédiés à la signalisation, un flux transportant des blocs d'information de données utiles, un flux transportant des blocs d'information dédiés au contrôle. Les blocs d'information dédiés à la signalisation permettent notamment d'établir et de clôturer une session et les blocs d'information de données utiles comprennent les données en lien avec le service recherché. Les blocs d'information dédiés au contrôle permettent de contrôler l'échange des blocs d'information de données utiles. La session est dite alors multi-flux.

Un bloc d'information comprend des données qui permettent d'identifier le flux qui le transporte. En recherchant des données d'identification de flux dans les blocs d'information, il est donc possible d'identifier les blocs qui font partie d'un même flux. Toutefois, dans le cas d'une session multi-flux, cette information n'est pas suffisante pour déterminer les blocs d'information qui appartiennent à une même session. L'état de la technique actuel ne permet donc pas d'appliquer un traitement identique à tous les blocs d'information appartenant à une même session.

Le document US20050207443 propose une transmission multi-flux permettant la reconstruction des données divisées pour être émis par plusieurs unités de transmission selon un premier protocole en transmettant selon un deuxième protocole des informations de contrôle relative aux unités de transmission utilisées. Ainsi, le document US20050207443 permet d'appliquer un traitement identique à toutes les blocs d'information de la même session une fois les données initiales reconstruites. L'inconvénient d'une telle méthode est ressources de calculs.

La présente invention propose un procédé de gestion de sessions au cours desquelles un terminal et un serveur s'échangent des blocs d'information organisés en plusieurs flux. Le procédé comporte le stockage dans une structure de données de premières données déterminées à partir d'un bloc d'information dédié à la signalisation et provenant du terminal, lesdites premières données permettant d'identifier le flux qui transporte ledit bloc d'information, ledit flux appartenant à une session. Le procédé comporte également le stockage dans la même structure de données de secondes données en liaison avec lesdites premières données, lesdites secondes données étant déterminées à partir d'au moins un autre bloc d'information dédié à la signalisation et transporté par le même flux, lesdites secondes données permettant d'identifier le ou les autres flux de la session.

Ainsi, par l'intermédiaire de la structure de données, un lien entre les différents flux appartenant à une même session est établi. Il est alors possible de traiter de manière identique tous les blocs appartenant à une même session.

Selon des modes de réalisation particuliers non limitatifs, le procédé selon l'invention présente les caractéristiques supplémentaires prises isolément ou en combinaison, énoncées ci-après :
Le procédé comporte la détermination de la charge d'un ensemble comprenant au moins un serveur, le stockage dans la structure des premières données étant conditionné par le niveau de ladite charge.

Si la charge de l'ensemble de serveurs est trop importante, le bloc d'information contenant les premières données n'est pas transmis vers l'ensemble des serveurs. Les premières données ne seront pas alors stockées ou maintenues stockées dans la structure de données.

Le procédé comporte la sélection d'un serveur dans l'ensemble de serveurs pour ladite session, et le stockage dans ladite structure de données, en liaison avec lesdites premières, de troisièmes données permettant d'identifier le serveur sélectionné.

Ainsi, par l'intermédiaire de la structure de données, il est possible d'adresser tous les blocs d'information appartenant à une même session vers le même serveur.

L'invention concerne aussi un support de stockage contenant une structure de données élaborée par la mise en oeuvre du procédé tel que décrit ci-dessus.

L'invention concerne aussi un équipement réseau pour la gestion de sessions au cours desquelles un terminal et un serveur s'échangent des blocs d'information organisés en plusieurs flux, ledit équipement comportant des moyens pour stocker des premières données déterminées à partir d'un bloc d'information dédié à la signalisation et provenant du terminal, lesdites premières données permettant d'identifier le flux qui transporte ledit bloc d'information, ledit flux appartenant à une session. L'équipement réseau comporte également des moyens pour stocker des secondes données en liaison avec lesdites premières données, lesdites secondes données étant déterminées à partir d'au moins un autre bloc d'information dédié à la signalisation et transporté par le même flux, lesdites secondes données permettant d'identifier le ou les autres flux de la session.

Dans un premier mode de réalisation, l'équipement réseau comprend des moyens pour déterminer les premières données permettant d'identifier le flux qui transporte ledit bloc d'information.

Dans un autre mode de réalisation, l'équipement réseau comprend des moyens pour déterminer les secondes données permettant d'identifier le ou les autres flux de la session.

L'invention concerne aussi l'utilisation d'une structure de données élaborées par la mise en oeuvre du procédé décrit ci-dessus.

L'invention concerne aussi un système pour la fourniture d'au moins un service à un terminal, ledit système comportant au moins un terminal et au moins un serveur échangeant des blocs d'information organisés en plusieurs flux et un équipement réseau tel que décrit ci-dessus.

L'invention concerne aussi un programme d'ordinateur comportant des instructions adaptées à la mise en oeuvre d'un procédé tel que décrit plus haut, lorsque ledit programme est exécuté par un processeur.

L'invention concerne aussi un support d'information contenant un tel programme d'ordinateur.

L'invention sera mieux comprise et d'autres particularités et avantages apparaîtront à la lecture de la description, faite à titre d'exemple, cette description faisant référence aux dessins annexés :
- La Fig.1 est un schéma d'une architecture d'un système selon l'invention de fourniture d'un service à un terminal utilisateur;
- La Fig.2 est un diagramme représentant les étapes d'un procédé de gestion de sessions selon l'invention;
- La Fig.3 est une représentation d'une structure de données selon l'invention destinée à stocker les données permettant d'identifier les différents flux appartenant à une même session.

L'invention est décrite ci-après dans une application particulière à un service de transmission video en continu. Cette invention s'applique également à tout type de services nécessitant une session au cours de laquelle un terminal et un serveur s'échangent des blocs d'information organisés en plusieurs flux, tel qu'un service de voix sur IP ou un service d'échange de fichiers utilisant le protocole FTP (pour "File Transfert Protocol").

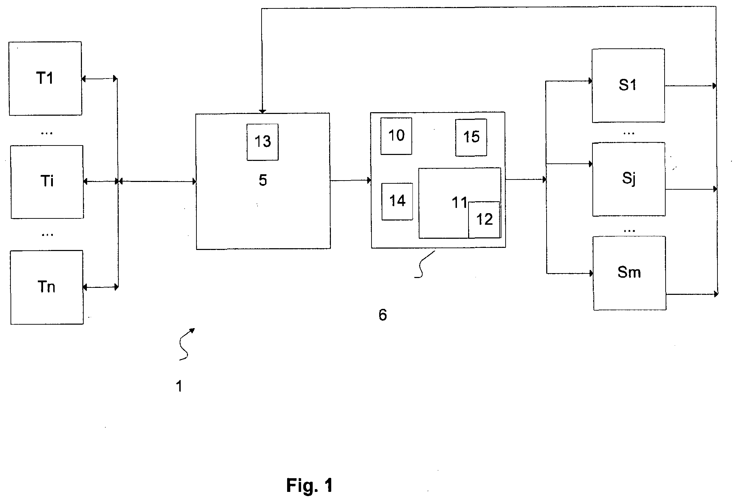

La Fig.1 présente un schéma d'une architecture d'un système 1 pour la fourniture d'au moins un service à un terminal.

Le système 1 comprend n terminaux utilisateurs Ti avec 1*≤i≤n* et n un entier quelconque. Le système comprend également un ensemble de m serveurs Sj fournissant un service, avec 1*≤j≤m* et m un entier quelconque.

Un terminal Ti échange des blocs d'information avec un serveur Sj. Lorsque les blocs d'information sont envoyés par le terminal Ti, les blocs d'information sont dit montants. A l'inverse, lorsque les blocs d'information sont envoyés par le serveur Sj les blocs d'information sont dit descendants.

Le système 1 comprend, en outre, un équipement passerelle 5 permettant d'interconnecter les n terminaux Ti avec les m serveurs Sj.

Un équipement réseau 6 est placé en coupure de flux entre l'équipement passerelle 5 et les m serveurs Sj. Dans le cas où m>1, l'équipement réseau 6 est un équipement noeud situé à l'entrée de l'ensemble des m serveurs Sj. Cet équipement réseau 6 va permettre notamment d'adresser les blocs d'information montants vers les bons serveurs Sj.

La Fig. 1 présente un schéma d'une architecture dans laquelle les blocs d'information descendants ne traversent pas l'équipement réseau 6.

Dans cette architecture, l'équipement réseau 6 comprend des moyens 10 pour déterminer, à partir d'un bloc d'information montant dédié à la signalisation, des premières données permettant d'identifier le flux d'une session transportant ledit bloc d'information. Ces premières données sont ensuite stockées dans une structure de données 12 sur un support de stockage. Ce support peut être constitué par tout moyen de stockage 11 tel qu'une mémoire autorisant l'écriture, la lecture et l'effacement des données dans la structure.

L'équipement passerelle 5 comprend des moyens 13 pour déterminer à partir d'au moins un autre bloc d'information dédié à la signalisation et transporté par le même flux, des secondes données permettant d'identifier le ou les autres flux de la session. Dans certains cas, les secondes données sont présentes dans leur totalité dans cet autre bloc d'information. En variante, les secondes données ne sont présentes que partiellement dans ledit autre bloc d'information. Les secondes données manquantes sont alors déduites à partir des secondes données qui sont présentes dans ledit autre bloc d'information.

Les secondes données sont ensuite transférées à l'équipement réseau 6 et stockées dans la structure de données 12.

En variante, l'équipement passerelle 5 comprend les moyens de détermination 10 des premières données en plus des moyens de détermination 13 des secondes données. Ces premières et secondes données sont ensuite transférées à l'équipement réseau 6 et stockées dans la structure de données 12.

L'équipement réseau 6 comporte également des moyens de détermination 14 de la charge de l'ensemble des m serveurs Sj.

L'équipement réseau comprend, en outre, des moyens de comparaison 15 de la charge de l'ensemble des m serveurs Sj avec un ou plusieurs seuils.

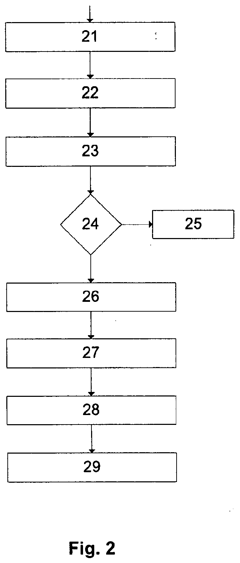

La Fig.2 est un diagramme présentant les étapes d'un procédé de gestion de sessions selon l'invention.

Pour l'échange de blocs d'information descendants entre un serveur Sj et un terminal Ti, une session doit d'abord être établie entre ce terminal Ti et ce serveur Sj. L'établissement de la session débute par l'envoi d'un premier bloc d'information montant par le terminal Ti en direction de l'équipement réseau 6. A cet instant, la session n'est pas encore établie. Le premier bloc d'information comprend des premières données permettant d'identifier le flux transportant ce premier bloc d'information. Ces premières données permettent d'identifier le flux transportant les blocs d'information dédiés à la signalisation dans la session. Dans le cas où le terminal Ti et l'équipement réseau 6 sont connectés à un réseau informatique utilisant le protocole Internet, les premières données sont constituées par une adresse IP du terminal Ti, un numéro de port du terminal Ti, une adresse IP du serveur Sj, un numéro de port du serveur Sj, et une indication du protocole de niveau transport utilisé.

Une adresse IP est un numéro qui permet d'identifier tout matériel informatique connecté à un réseau informatique utilisant le protocole Internet.

Un port est considéré comme un accès à un système d'exploitation d'un matériel informatique. Il est identifié par un numéro de port.

Un protocole de niveau transport définit un ensemble de procédures permettant de contrôler et de réguler les échanges de blocs d'information entre deux entités d'un réseau de communication. Ce contrôle et cette régulation ont lieu au niveau de la couche transport de la pile TCP/IP. On distingue principalement deux protocoles utilisé pour l'Internet. Le protocole UDP ("User Datagram Protocol") et le protocole TCP ("Transmission Control Protocol"). Le premier est un protocole opèrant en mode non-connecté. Ce protocole ne prévoit pas de mécanisme pour vérifier si tous les blocs d'information arrivent bien à destination. Le second est un protocole opérant en mode connecté. Ce protocole permet une plus grande fiabilité dans l'échange des blocs d'information.

Le numéro de port du terminal Ti identifie le port utilisé par le terminal Ti pour l'envoi et la réception des blocs d'information dédiés à la signalisation. L'adresse IP du serveur Sj est une adresse IP virtuelle. Cette adresse IP virtuelle est commune à l'équipement réseau 6 et aux m serveurs Sj. Le numéro de port du serveur Sj identifie le port utilisé par le serveur Sj pour l'envoi et la réception des blocs d'information dédiés à la signalisation. Ce numéro de port est un numéro de port pré-attribué. Ainsi pour un service de transmission vidéo en continu utilisant le protocole de signalisation RTSP (pour "Real-Time Streaming Protocol"), le numéro de port du serveur Sj est, par exemple, le numéro 554. Pour un service de téléphonie sur IP utilisant le protocole de signalisation SIP ("Session Initiation Protocol"), le numéro de port du serveur Sj est, par exemple, le numéro 5060. Pour un service d'échange de fichier utilisant le protocole FTP, le numéro de port du serveur Sj est, par exemple, le numéro 21.

Le protocole de niveau transport utilisé dépend de la qualité recherchée dans l'échange des blocs d'information. A titre d'exemple, pour l'échange de blocs d'information de signalisation selon les protocoles RTSP et FTP, c'est le protocole TCP qui est utilisé. Pour l'échange de blocs d'information selon le protocole SIP, c'est le protocole UDP.

Le premier bloc d'information montant est reçu par l'équipement réseau 6. Une première étape 21 du procédé de gestion de sessions consiste à déterminer, à partir de ce premier bloc d'information, les premières données permettant d'identifier le flux qui transporte ledit bloc d'information.

Une étape 22 permet le stockage des premières données dans la structure de données 12 si lesdites premières données ne sont pas déjà stockées dans ladite structure.

Une étape 23 consiste à déterminer la charge de l'ensemble des m serveurs Sj. Pour cela les moyens de détermination 14 collectent des informations sur les charges locales des différents serveurs Sj.

Par charge locale, il est compris, par exemple, la disponibilité du CPU sur un serveur, la taille de la file de réception de ce serveur, l'utilisation de la mémoire du serveur, etc.

La charge de l'ensemble des m serveurs Sj est déterminée à partir des charges locales calculées périodiquement dans les serveurs Sj. La charge de l'ensemble des m serveurs Sj est, par exemple, déterminée en pondérant la moyenne et la variance des différentes charges locales calculées.

En variante, la charge de l'ensemble des m serveurs est déterminée à partir des charges locales estimées dans les serveurs Sj. Pour cela, un historique des charges locales des m serveurs Sj est stocké pour un intervalle de temps donné. La charge locale dans un serveur Sj est estimée en fonction de cet historique.

Dans une autre variante, la charge de l'ensemble des m serveurs est déterminée à partir d'une combinaison des charges locales calculées et estimées dans les différents serveurs Sj. La combinaison des charges locales calculées et estimées permet de minimiser les effets des pics de charge se produisant dans les serveurs Sj. La détermination de la charge de l'ensemble des m serveurs Sj est alors plus précise.

Une fois la charge de l'ensemble des m serveurs déterminée, celle-ci est comparée à l'étape 24 à un ou plusieurs seuils prédéterminés. Ces seuils peuvent être fixés. En variante, ces seuils sont ajustés en fonction de la charge de l'ensemble des m serveurs Sj. Cette comparaison conditionne l'admission du premier bloc d'information montant vers l'ensemble des m serveurs Sj. Ceci permet de ne pas surcharger l'ensemble des m serveurs Sj et donc d'éviter que des sessions déjà établies ne soient interrompues brusquement en cas de surcharge. En effet, l'établissement de la session par le transfert du premier bloc vers l'ensemble des m serveurs Sj n'est autorisé que si la charge globale de l'ensemble des m serveurs Sj le permet. Les sessions déjà établies sont donc privilégiées par rapport aux sessions en cours d'établissement en cas de surcharge de l'ensemble des m serveurs Sj.

Lorsque pour des raisons de charge de l'ensemble des m serveurs Sj, le premier bloc montant n'est pas transmis, les premières données ne sont pas conservées dans la structure de données 12 et l'établissement de la session n'est pas acceptée. Le premier bloc d'information est alors détruit à l'étape 25. Cela revient à conditionner le stockage des premières données dans la structure 12 par le niveau de charge déterminé de l'ensemble des m serveurs Sj.

En variante, l'étape 23 a lieu avant l'étape 22 et le stockage des premières données ne se fait qu'après le calcul de la charge de l'ensemble des m serveurs Sj.

En variante, en plus de la charge de l'ensemble des m serveurs, il est tenu compte de la charge locale de l'équipement réseau 6 pour la transmission du premier bloc montant.

Lorsque le premier bloc est transmis vers l'ensemble des m serveurs Sj, l'un des serveurs est sélectionné à l'étape 26 pour le recevoir. Le serveur sélectionné est le serveur qui a la charge locale estimée la plus faible. En variante, le serveur sélectionné est le serveur qui a la charge locale calculée la plus faible.

A l'étape 27, des troisièmes données sont stockées en liaison avec lesdites premières données, dans la structure de données 12. Ces troisièmes données permettent d'identifier le serveur Sj sélectionné.

Le premier bloc est ensuite relayé au serveur Sj sélectionné par l'équipement réseau 6. Pour cela différentes techniques peuvent être employées, comme des techniques d'encapsulation IP-IP, ou d'encapsulation du niveau liaison du bloc d'information.

Une fois le premier bloc d'information montant reçu par le serveur sélectionné, la session est établie. Le terminal Ti et le serveur Sj peuvent alors s'échanger d'autres blocs dédiés à la signalisation et transportés par le même flux que le premier bloc d'information montant.

L'étape 28 permet la détermination, à partir d'au moins un autre bloc d'information échangé, de secondes données permettant d'identifier les autres flux de la session. Les secondes données sont constituées par l'adresse IP du terminal Ti, l'adresse IP virtuelle du serveur Sj, une indication du protocole de niveau transport utilisé.

Ces autres flux comportent notamment un flux transportant des blocs d'information de données utiles. Les secondes données comprennent alors un numéro de port utilisé par le terminal Ti pour l'échange de blocs d'information de données utiles transportés par ce flux de données utiles. Les secondes données comprennent également un numéro de port utilisé par le serveur Sj pour l'échange de blocs d'information de données utiles transportés par le flux de données utiles.

Dans certains cas, la session comporte aussi un flux dédié au contrôle de l'échange des blocs d'information de données utiles. Ce flux transporte des blocs d'information de contrôle. Dans ce cas, les secondes données comprennent également les numéros de ports utilisés par le terminal Ti et le serveur Sj pour l'échange des blocs d'information de contrôle. Selon une première variante, ces numéros de ports sont présents dans le bloc d'information utilisé à l'étape 28. Selon une seconde variante, ces numéros de ports se déduisent à partir des numéros de ports utilisés pour l'échange des blocs d'information de signalisation.

Les secondes données sont ensuite stockées à l'étape 29 dans la structure 12 en liaison avec les premières données.

Le ou les blocs d'information utilisés à l'étape 28 sont dédiés à la signalisation et transportés par le même flux que le premier bloc d'information.

Dans le cadre du protocole RTSP, on utilise un seul bloc descendant contenant une réponse à une requête spécifique SETUP provenant du terminal. C'est l'analyse de ce bloc qui permet de déterminer les secondes données. Le protocole RTSP est décrit dans la RFC 2326.

Dans le cadre du protocole SIP, on utilise deux blocs d'information. L'un des blocs est montant et contient une requête INVITE spécifique et l'autre bloc est descendant et contient la réponse à cette requête INVITE. C'est l'analyse de ces deux blocs qui permet de déterminer les secondes données. L'analyse du bloc montant permet notamment de déterminer le numéro de port utilisé par le terminal Ti pour l'échange de blocs d'information de données utiles. L'analyse du bloc descendant permet de déterminer le numéro de port utilisé par le terminal Sj pour l'échange de blocs d'information de données utiles. Le protocole SIP est décrit dans la RFC 3261.

Dans le cadre du protocole FTP en mode passif, on utilise un bloc descendant. contenant une requête ENTERING PASSIV MODE. L'analyse de ce bloc permet de déterminer le numéro de port utilisé par le serveur Sj pour l'envoi et la réception de blocs d'information de données utiles. Le protocole FTP est décrit dans la RFC 959.

Les différentes étapes du procédé de gestion de sessions sont avantageusement mises en oeuvre par des instructions de programmes d'ordinateurs de manière à constituer la structure de données 12.

Ce programme utilise n'importe quel langage de programmation. Il prend la forme de code source, code objet, ou de code intermédiaire entre code source et code objet, tel que dans une forme partiellement compilée, ou dans n'importe quelle autre forme souhaitable.

En outre, ce programme est enregistré sur un support d'information. Ce support d'information peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

Alternativement, le support d'informations peut être un circuit intégré dans lequel le programme est incorporé, le circuit étant adapté pour exécuter ou pour être utilisé dans l'exécution du procédé de gestion de sessions selon l'invention.

Une fois le premier bloc d'information d'une session admis en direction du serveur Sj, les autres blocs montants de la session sont admis sans contrôle vers le serveur Sj. En variante, l'admission des autres blocs d'information montants dépend, par exemple, de la charge de l'ensemble des m serveurs Sj. Ce contrôle d'admission des autres blocs d'information est alors effectué par l'équipement 6.

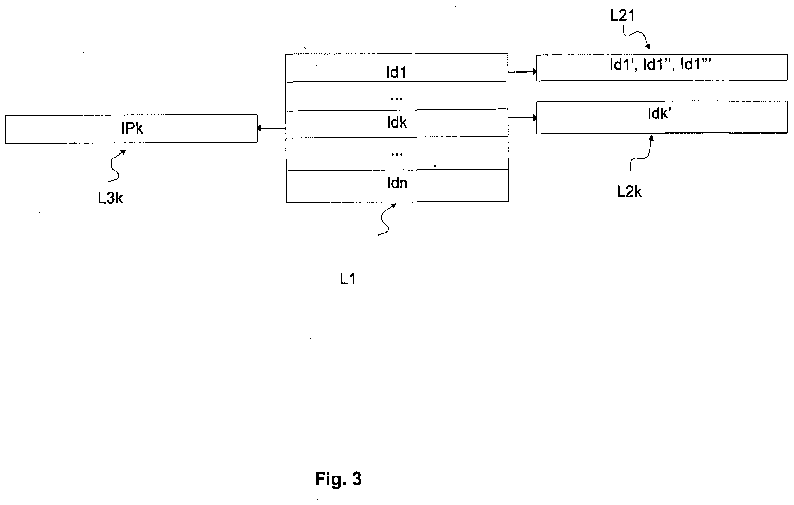

La Fig.3 présente un exemple de réalisation d'une structure de données destinée à stocker des données en lien avec les blocs d'information échangés.

Cette structure de données comprend une première liste L1 indexée par des premières données permettant d'identifier les différents flux transportant des blocs d'information dédiés à la signalisation.

Les premières données sont inscrites dans la liste sous la forme d'un identifiant Idk lors de l'étape 22. Cet identifiant peut être un n-upplet comprenant l'adresse IP du terminal Ti, l'adresse IP virtuelle du serveur Sj, le numéro de port du terminal Ti, le numéro de port du serveur Sj, l'indication du protocole de niveau transport utilisé.

En variante les premières données sont inscrites dans la liste L1 sous la forme du haché du n-uplet. Ceci permet de limiter l'espace mémoire occupé par lesdites premières données.

Chaque entrée k de la liste L1 est associée à une seule session.

Chaque entrée k de la liste L1 référence une deuxième liste L2k. La deuxième liste L2k est indexée par les secondes données permettant d'identifier le ou les autres flux associés à la même session que le flux identifié par les premières données. Ces secondes données sont stockées dans la structure lors de l'étape 29 sous la forme d'un ou plusieurs identifiant Idk', Idk", Idk'" ... selon qu'il y a un ou plusieurs autres flux associés.

Ainsi, cette structure de données 12 permet d'établir un lien entre les différents flux appartenant à une même session.

Chaque entrée k de la liste L1 référence également une troisième liste L3k contenant les troisièmes données. Ces troisièmes données permettent d'identifier un serveur. Ce serveur est sélectionné pour recevoir l'ensemble des blocs d'information échangés au cours de la session associée à l'entrée k de la liste L1.

Les troisièmes données sont, par exemple, une adresse IPk interne identifiant le serveur sélectionné à l'intérieur de l'ensemble des m serveurs Sj.

Les troisièmes données sont inscrites dans la structure lors de l'étape 27 du procédé de gestion de sessions.

Les premières, secondes et troisièmes données associées une session peuvent être supprimées dans la structure 12. Cette suppression a lieu notamment si aucun bloc d'information appartenant à cette session n'est reçu par l'équipement 6 au cours d'une période déterminée.

La structure de données est utilisable pour traiter des blocs d'information reçus en provenance d'un terminal et à destination d'un serveur.

Un traitement consiste à relayer vers le serveur Sj approprié chaque bloc d'information montant.

Pour cela chacun des blocs d'information est analysé pour identifier les données permettant d'identifier le flux transportant ledit bloc d'information. Ces données sont des premières données ou des secondes données appartenant à la liste L1 ou à une liste L2k.

Dans le cas où ces données constituent une entrée k de la liste L1, il suffit de consulter la liste L3k associée pour identifier le serveur devant recevoir le bloc d'information.

Dans le cas où les données constituent une entrée d'une liste L2k, il suffit de consulter la liste L3k associée à l'entrée k de la liste L1 pour identifier le serveur devant recevoir le bloc d'information.

Ainsi, par l'intermédiaire de la structure de données, il est possible d'adresser tous les blocs d'information appartenant à une même session vers le même serveur Sj. La structure de données permet alors de traiter des blocs d'information en mode orienté session (en anglais "Session aware").

L'invention n'est pas limitée aux modes de réalisation décrits précédemment.

En effet, les blocs d'information montants et descendants pourraient traverser l'équipement réseau 6. Ainsi, cet équipement réseau 6 pourrait comprendre les moyens de détermination 10 et 13 des premières et secondes données, ainsi que la structure de données 12. Dans ce mode de réalisation, le premier bloc pourrait être relayé au serveur Sj par une technique NAT (pour "Network Address Translation").

En outre, dans le cas où il n'y a qu'un seul serveur S1, l'équipement réseau 6 pourrait être intégré dans le serveur S1. L'équipement réseau 6 pourrait être ainsi intégré sous la forme d'un module.

Dans le cas où différents types de données utiles doivent être échangés entre le terminal Ti et le serveur Sj, la session peut comporter différents flux transportant des blocs d'information de données utiles. Ces différents flux sont alors identifiés de manière différente.

Les différents types de données utiles peuvent être différents fichiers. En variante, les différents types de données utiles sont différentes parties d'un même fichier, par exemple la partie vidéo et la partie audio d'un fichier.

## Revendications

1. Procédé de gestion de sessions multi-flux au cours desquelles un terminal (Ti) et un serveur (Sj) s'échangent, lors d'une session multi-flux, des blocs d'information organisés en plusieurs flux différents comportant:
un flux de signalisation dédié au transport de blocs d'informations dédiés à la signalisation utilisés pour établir les sessions et clore les sessions multi-flux; et
un ou des flux distincts du flux de signalisation, au moins un flux distinct transportant des blocs de données utiles comportant des données en lien avec un ou plusieurs services fournis par le serveur,
**caractérisé en ce que** ledit procédé comportant le stockage dans une structure de données (12):
- (22) de premières données déterminées (21) à partir d'un bloc d'information dédié à la signalisation et provenant du terminal (Ti), lesdites premières données permettant d'identifier le flux de signalisation qui transporte ledit bloc d'information dédié à la signalisation, ledit flux de signalisation appartenant à la session;
- (29) de secondes données en liaison avec lesdites premières données, lesdites secondes données étant déterminées (28) à partir d'au moins un autre bloc d'information dédié à la signalisation et transporté par le même flux de signalisation, lesdites secondes données permettant d'identifier le ou les autres flux distincts de la session,
les premières données, et les deuxièmes données stockées dans la structure de données liant ensemble dans la même session le flux de signalisation et le ou les flux distincts.

2. Procédé de gestion de sessions selon la revendication 1, dans lequel le stockage (22, 29) des dites premières et secondes données dans la structure de données (12) est réalisé par un équipement (6) placé en coupure de flux entre le terminal (Ti) et le serveur (Sj).

3. Procédé de gestion de sessions selon la revendication 1, caractérisé en ce ledit serveur (Sj) faisant partie d'un ensemble ({Sj}_{1≤j≤m}) comprenant au moins un serveur, ledit procédé comporte :
- la détermination (23) de la charge de l'ensemble, le stockage dans ladite structure (12) des premières données étant conditionné par le niveau de ladite charge.

4. Procédé de gestion de sessions selon la revendication 1, **caractérisé en ce que** ledit serveur (Sj) faisant partie d'un ensemble ({Sj}_{1≤j≤m}) comprenant au moins un serveur, ledit procédé comporte :
- la sélection (26) d'un serveur (Sj) dans l'ensemble ({Sj}_{1≤j≤m}) de serveurs pour ladite session, et
- le stockage (27) dans ladite structure de données (12), en liaison avec lesdites premières, de troisièmes données permettant d'identifier le serveur sélectionné (Sj).

5. Support de stockage contenant une structure de données (12) élaborée par la mise en oeuvre d'un procédé selon la revendication 1.

6. Equipement réseau pour la gestion de sessions multi-flux au cours desquelles un terminal (Ti) et un serveur (Sj) s'échangent, lors d'une session multi-flux, des blocs d'information organisés en plusieurs flux différents, comportant:
un flux de signalisation dédié au transport de blocs d'informations dédiés à la signalisation utilisés pour établir les sessions et clore les sessions ; et
un ou des flux distincts du flux de signalisation, au moins un flux distinct transportant des blocs de données utiles comportant des données en lien avec un ou plusieurs services fournis par le serveur,
**caractérisé en ce que** ledit équipement (5, 6) comporte :
- des moyens (11) pour stocker dans une structure de données (12)des premières données déterminées à partir d'un bloc d'information dédié à la signalisation et provenant du terminal, lesdites premières données permettant d'identifier le flux de signalisation qui transporte ledit bloc d'information, ledit flux de signalisation appartenant à la session;
- des moyens (11) pour stocker dans une structure de données (12)des secondes données en liaison avec lesdites premières données, lesdites secondes données étant déterminées à partir d'au moins un autre bloc d'information dédié à la signalisation et transporté par le même flux de signalisation, lesdites secondes données permettant d'identifier le ou les autres flux distincts de la session, les premières données, et les deuxièmes données stockées dans la structure de données liant ensemble dans la même session le flux de signalisation et le ou les flux distincts.

7. Equipement réseau selon la revendication précédente **caractérisé en ce qu'**il comprend :
- des moyens (10) pour déterminer les premières données permettant d'identifier le flux qui transporte ledit bloc d'information.

8. Equipement réseau selon la revendication 7 **caractérisé en ce qu'**il comprend :
- des moyens (13) pour déterminer les secondes données permettant d'identifier le ou les autres flux de la session.

9. Utilisation d'une structure de données élaborées par la mise en oeuvre d'un procédé selon la revendication 1 pour traiter des blocs d'information reçu en provenance d'un terminal (Ti) et à destination d'un serveur (Sj).

10. Système pour la fourniture d'au moins un service à un terminal, **caractérisé en ce que** ledit système (1) comporte au moins un terminal (Ti) et au moins un serveur (Sj) échangeant des blocs d'information organisés en plusieurs flux et un équipement réseau (6) selon la revendication 6, placé en coupure de flux entre ledit au moins un serveur (Sj) et ledit au moins un terminal (Ti).

11. Programme d'ordinateur comportant des instructions adaptées à la mise en oeuvre d'un procédé selon la revendication 1, lorsque ledit programme est exécuté par un processeur.

12. Support d'information contenant un programme d'ordinateur qui comporte des instructions adaptées à la mise en oeuvre d'un procédé selon la revendication 1, lorsque ledit programme est exécuté par un processeur.

## Patentansprüche

1. Verfahren zur Verwaltung von Multistream-Sitzungen, in deren Verlauf ein Endgerät (Ti) und ein Server (Sj) während einer Multistream-Sitzung in mehreren unterschiedlichen Streams organisierte Informationsblöcke miteinander austauschen, die aufweisen:
einen Signalisierungsstream, der der Übertragung von der Signalisierung dedizierten Informationsblöcken dediziert ist, die verwendet werden, um die Sitzungen aufzubauen und die Multistream-Sitzungen zu beenden; und
einen oder mehrere vom Signalisierungsstream unterschiedliche Streams, wobei mindestens ein unterschiedlicher Stream Nutzdatenblöcke überträgt, die Daten in Verbindung mit einem oder mehreren vom Server gelieferten Diensten aufweisen,
**dadurch gekennzeichnet, dass** das Verfahren das Speichern in einer Datenstruktur (12) aufweist:
- (22) von ersten bestimmten Daten (21) ausgehend von einem Informationsblock, der der Signalisierung dediziert ist und vom Endgerät (Ti) kommt, wobei die ersten Daten es ermöglichen, den Signalisierungsstream zu erkennen, der den der Signalisierung dedizierten Informationsblock überträgt, wobei der Signalisierungsstream zur Sitzung gehört;
- (29) von zweiten Daten in Verbindung mit den ersten Daten, wobei die zweiten Daten ausgehend von mindestens einem anderen Informationsblock bestimmt werden (28), der der Signalisierung dediziert ist und vom gleichen Signalisierungsstream überträgt wird, wobei die zweiten Daten es ermöglichen, den oder die anderen unterschiedlichen Streams der Sitzung zu erkennen,
wobei die ersten Daten und die zweiten Daten, die in der Datenstruktur gespeichert sind, in der gleichen Sitzung den Signalisierungsstream und den oder die unterschiedlichen Streams miteinander verbinden.

2. Verfahren zur Verwaltung von Sitzungen nach Anspruch 1, wobei das Speichern (22, 29) der ersten und zweiten Daten in der Datenstruktur (12) von einer Ausrüstung (6) durchgeführt wird, die in Streamunterbrechung zwischen dem Endgerät (Ti) und dem Server (Sj) angeordnet ist.

3. Verfahren zur Verwaltung von Sitzungen nach Anspruch 1, **dadurch gekennzeichnet, dass**, da der Server (Sj) Teil einer Einheit ({Sj}_{1≤j≤m}) ist, die mindestens einen Server enthält, das Verfahren aufweist:
- die Bestimmung (23) der Auslastung der Einheit, wobei das Speichern in der Struktur (12) der ersten Daten vom Auslastungspegel bedingt wird.

4. Verfahren zur Verwaltung von Sitzungen nach Anspruch 1, **dadurch gekennzeichnet, dass**, da der Server (Sj) Teil einer Einheit ({Sj}_{1≤j≤m}) ist, die mindestens einen Server enthält, das Verfahren aufweist:
- die Auswahl (26) eines Servers (Sj) aus der Einheit ({Sj}_{1≤j≤m}) von Servern für die Sitzung, und
- das Speichern (27) in der Datenstruktur (12), in Verbindung mit den ersten, von dritten Daten, die es ermöglichen, den ausgewählten Server (Sj) zu erkennen.

5. Speicherträger, der eine Datenstruktur (12) enthält, die durch die Durchführung eines Verfahrens nach Anspruch 1 erarbeitet wird.

6. Netzausrüstung für die Verwaltung von Multistream-Sitzungen, in deren Verlauf ein Endgerät (Ti) und ein Server (Sj) während einer Multistream-Sitzung in mehreren unterschiedlichen Streams organisierte Informationsblöcke miteinander austauschen, die aufweisen:
einen Signalisierungsstream, der der Übertragung von der Signalisierung dedizierten Informationsblöcken dediziert ist, die verwendet werden, um die Sitzungen aufzubauen und die Sitzungen zu beenden; und
einen oder mehrere vom Signalisierungsstream unterschiedliche Streams, wobei mindestens ein unterschiedlicher Stream Nutzdatenblöcke überträgt, die Daten in Verbindung mit einem oder mehreren vom Server gelieferten Diensten aufweisen,
**dadurch gekennzeichnet, dass** die Ausrüstung (5, 6) aufweist:
- Einrichtungen (11), um in einer Datenstruktur (12) erste Daten zu speichern, die ausgehend von einem der Signalisierung dedizierten und vom Endgerät kommenden Informationsblock bestimmt werden, wobei die ersten Daten es ermöglichen, den Signalisierungsstream zu erkennen, der den Informationsblock überträgt, wobei der Signalisierungsstream zur Sitzung gehört;
- Einrichtungen (11), um in einer Datenstruktur (12) zweite Daten in Verbindung mit den ersten Daten zu speichern, wobei die zweiten Daten ausgehend von mindestens einem anderen Informationsblock bestimmt werden, der der Signalisierung dediziert ist und vom gleichen Signalisierungsstream übertragen wird, wobei die zweiten Daten es ermöglichen, den oder die anderen unterschiedlichen Streams der Sitzung zu erkennen, wobei die ersten Daten und die zweiten Daten, die in der Datenstruktur gespeichert sind, in der gleichen Sitzung den Signalisierungsstream und den oder die unterschiedlichen Streams miteinander verbinden.

7. Netzausrüstung nach dem vorhergehenden Anspruch, **dadurch gekennzeichnet, dass** sie enthält:
- Einrichtungen (10) zum Bestimmen der ersten Daten, die es ermöglichen, den Stream zu erkennen, der den Informationsblock überträgt.

8. Netzausrüstung nach Anspruch 7, **dadurch gekennzeichnet, dass** sie enthält:
- Einrichtungen (13) zum Bestimmen der zweiten Daten, die es ermöglichen, den oder die anderen Streams der Sitzung zu erkennen.

9. Verwendung einer Struktur von Daten, die durch die Durchführung eines Verfahrens nach Anspruch 1 erarbeitet werden, um Informationsblöcke zu verarbeiten, die von einem Endgerät (Ti) empfangen werden und für einen Server (Sj) bestimmt sind.

10. System zur Bereitstellung mindestens eines Diensts für ein Endgerät, **dadurch gekennzeichnet, dass** das System (1) mindestens ein Endgerät (Ti) und mindestens einen Server (Sj), die in mehreren Streams organisierte Informationsblöcke austauschen, und eine Netzausrüstung (6) nach Anspruch 6 aufweist, die in Streamunterbrechung zwischen dem mindestens einen Server (Sj) und dem mindestens einen Endgerät (Ti) angeordnet ist.

11. Computerprogramm, das Anweisungen aufweist, die für die Durchführung eines Verfahrens nach Anspruch 1 geeignet sind, wenn das Programm von einem Prozessor ausgeführt wird.

12. Informationsträger, der ein Computerprogramm enthält, das Anweisungen aufweist, die für die Durchführung eines Verfahrens nach Anspruch 1 geeignet sind, wenn das Programm von einem Prozessor ausgeführt wird.

## Claims

1. Method for managing multi-stream sessions during which a terminal (Ti) and a server (Sj) exchange, during a multi-stream session, information blocks organized into several different streams comprising:
a signalling stream dedicated to the transport of information blocks which are dedicated to signalling and are used to establish the sessions and to close the multi-stream sessions; and
one or more streams distinct from the signalling stream, at least one distinct stream transporting useful data blocks comprising data linked with one or more services provided by the server,
**characterized in that** said method comprising the storage in a data structure (12):
- (22) of first data determined (21) on the basis of an information block dedicated to signalling and originating from the terminal (Ti), said first data allowing to identify the signalling stream which transports said information block dedicated to signalling, said signalling stream belonging to the session;
- (29) of second data in conjunction with said first data, said second data being determined (28) on the basis of at least one other information block dedicated to signalling and transported by the same signalling stream, said second data allowing to identify the other distinct stream or streams of the session,
the first data, and the second data stored in the data structure linking together in the same session the signalling stream and the distinct stream or streams.

2. Method for managing sessions according to Claim 1, in which the storage (22, 29) of said first and second data in the data structure (12) is carried out by a device (6) spliced into stream between the (Ti) and the server (Sj).

3. Method for managing sessions according to Claim 1, **characterized in that**, said server (Sj) forming part of a set ({Sj}_{1≤j≤m}) comprising at least one server, said method comprises:
- the determination (23) of the load of the set, the storage in said structure (12) of the first data being conditioned by the level of said load.

4. Method for managing sessions according to Claim 1, **characterized in that**, said server (Sj) forming part of a set ({Sj}_{1≤j≤m}) comprising at least one server, said method comprises:
- the selection (26) of a server (Sj) in the set ({Sj}_{1≤j≤m}) of servers for said session, and
- the storage (27) in said data structure (12), in conjunction with said first data, of third data allowing to identify the selected server (Sj).

5. Storage medium containing a data structure (12) devised by the implementation of a method according to Claim 1.

6. Network device for the management of multi-stream sessions during which a terminal (Ti) and a server (Sj) exchange, during a multi-stream session, information blocks organized into several different streams, comprising:
a signalling stream dedicated to the transport of information blocks which are dedicated to signalling and are used to establish the sessions and to close the sessions; and
one or more streams distinct from the signalling stream, at least one distinct stream transporting useful data blocks comprising data linked with one or more services provided by the server,
**characterized in that** said device (5, 6) comprises:
- means (11) for storing in a data structure (12) first data determined on the basis of an information block dedicated to signalling and originating from the terminal, said first data allowing to identify the signalling stream which transports said information block, said signalling stream belonging to the session;
- means (11) for storing in a data structure (12) second data in conjunction with said first data, said second data being determined on the basis of at least one other information block dedicated to signalling and transported by the same signalling stream, said second data allowing to identify the other distinct stream or streams of the session, the first data, and the second data stored in the data structure linking together in the same session the signalling stream and the distinct stream or streams.

7. Network device according to the preceding claim, **characterized in that** it comprises:
- means (10) for determining the first data allowing to identify the stream which transports said information block.

8. Network device according to Claim 7, **characterized in that** it comprises:
- means (13) for determining the second data allowing to identify the other stream or streams of the session.

9. Use of a data structure devised by the implementation of a method according to Claim 1 in order to process information blocks received originating from a terminal (Ti) and a destination for a server (Sj).

10. System for the provision of at least one service to a terminal, **characterized in that** said system (1) comprises at least one terminal (Ti) and at least one server (Sj) exchanging information blocks organized into several streams and a network device (6) according to Claim 6, spliced into stream between said at least one server (Sj) and said at least one terminal (Ti) .

11. Computer program comprising instructions suitable for the implementation of a method according to Claim 1, when said program is executed by a processor.

12. Information medium containing a computer program which comprises instructions suitable for the implementation of a method according to Claim 1, when said program is executed by a processor.
